# EUROPEAN PATENT SPECIFICATION

(11) **EP 0 613 978 B1**
(45) Date of publication and mention of the grant of the patent: **16.07.1997**
(21) Application number: 94850027.7
(22) Date of filing: 17.02.1994
(51) Int. Cl.: D21F 1/02, F16L 27/08

(54) **Construction related to the supply pipe for pulp in the headbox of a paper machine**
Konstruktion beim Zulaufrohr für Faserbrei zum Stoffauflauf einer Papiermaschine
Construction concernant la conduite d'amenée de la pâte pour une caisse de tête d'une machine à papier

(30) Priority: 18.02.1993 FI 930735
(43) Date of publication of application: 07.09.1994
(73) Proprietor: VALMET CORPORATION, 00620 Helsinki (FI)
(72) Inventor: Pitkäjärvi, Kari, SF-40200 Jyväskylä (FI)
(74) Representative: Rostovanyi, Peter

(56) References cited:
- CH-A- 393 068
- DE-A- 2 750 649
- FR-A- 2 567 081
- GB-A- 2 167 512
- US-A- 4 163 571

## Description

The invention concerns a construction related to a supply pipe arrangement for pulp at the inlet header of a tiltable headbox of a paper machine, more specifically an arrangement according to the preamble of claim 1, which is based on CH-A-393 068.

When the headbox of a paper machine is being tilted, the supply pipe is provided with means of equipment that permit rotation of the supply pipe. It has been known from prior art to manufacture at least a portion of the supply pipe out of an elastic material which permits rotation of the supply pipe while the opposite end of the elastic construction remains stationary. A drawback of said construction is the poor strength of the material. During tilting of the headbox, the end connected with the headbox has moved along a relatively wide path while the opposite end of the supply pipe has remained stationary. The material is subjected to a high torsional strain, as a result of which the service life of the pipe has become limited.

This problem has been solved by the characterizing features of claim 1. Preferred embodiments are defined in claims 2-7.

Thus, according to the invention, it has been realized to form a joint construction that permits a tilting movement of the headbox, i.e. a movement compensator, in the pulp supply pipe of the headbox, which joint construction comprises a first pipe, which is linked and placed in an oblique angle in relation to the header so that it permits rotation. In the construction, the first pipe of the movement compensator is connected with a second pipe, which is installed at an oblique angle in relation to the first pipe of the movement compensator.

The first pipe of the compensator is linked by means of a flange joint that permits rotation in relation to the feed pipe and, in a corresponding way, the first pipe is linked by means of a similar flange joint that permits rotation in relation to the second pipe of the compensator. In a corresponding way, the second pipe of the compensator is linked by means of a flange joint so that it can rotate in relation to the pulp supply pipe placed in a stationary position.

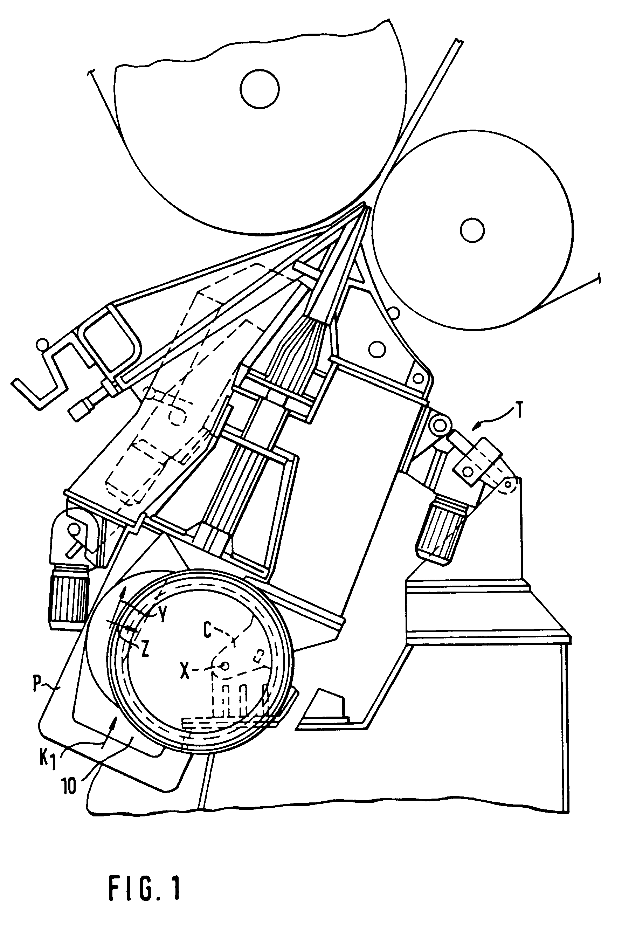

When the headbox of the paper machine is pivoted around the pivot shaft, the movement compensator in accordance with the invention permits said pivoting. The mechanism in accordance with the invention, which is a sort of an articulated crank mechanism, permits shifting of the headbox both in the y-direction and in the z-direction (FIG. 1). Thus, pivoting of the headbox produces no strains in the stationary pulp supply pipe. Also, the running of the flow of the pulp through said compensator is smooth, because the pipe arrangement of the compensator does not produce major directional changes in the running of the pulp flow. In practice, the difference in height between the centre line of the supply pipe and the end of the first pipe of the compensator is 30 mm and, in a corresponding way, the distance between the end of the first pipe and the central axis of the pulp feed pipe is 30 mm.

The invention will be described in the following with reference to some preferred embodiments illustrated in the figures in the accompanying drawing, the invention being, however, not supposed to be confined to said embodiments alone.

Figure 1 is a side view of the headbox of a paper machine.

Figure 2A shows a movement compensator in accordance with the invention as installed in the supply pipe connected with the pulp-flow header. The solution of equipment is shown as viewed in the direction K, indicated in Fig. 1.

Figure 2B shows the construction as viewed in the direction of the arrow K₂ indicated in Fig. 2A.

Figure 2C is an axonometric illustration of the geometry of the movement compensator.

Figure 2D shows the geometry of Fig. 2C as viewed in the direction of the arrow K₃.

Figure 3 is a sectional view taken along the line I-I in Fig. 2A.

Figure 4 is a side view of the flange construction as viewed in the direction of the arrow K₄ in Fig. 3 and partly in section.

Figure 5 is an enlarged illustration of the area A in Fig. 4.

Fig. 1 is a side view of the headbox of a paper machine. The headbox of the paper machine can be tilted by means of an actuator T. The geometric pivot axis of the headbox of the paper machine at the bracket C is, in Fig. 1, denoted with the letter X. The inlet header of the headbox P of the paper machine is connected with a paper-pulp supply pipe S₁. As an articulation structure that permits rotation of the pipe S₁, the supply pipe S₁ comprises a movement compensator 10, by whose means the supply pipe S₁ is connected with the intake pipe S₂.

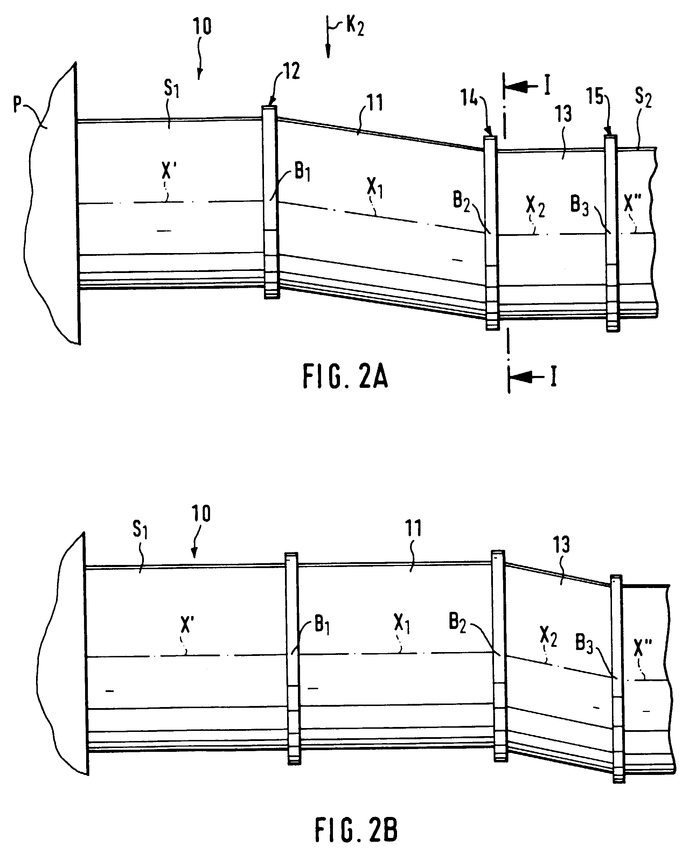

Figs. 2A and 2B show the supply pipe S₁, which is connected to the headbox P of the paper machine and which is also connected with the stationary pulp supply pipe S₂ by means of the compensator 10 which permits movement of the pipe S₁. The geometric central axis of the supply pipe S₁ is denoted with X'. In a corresponding way, the central axis of the stationary pulp supply pipe S₂ is denoted with X". The movement compensator 10 in accordance with the invention comprises a first pipe 11, which is linked with the supply pipe S₁ by means of an articulated connecting flange 12 that permits rotation. The first pipe 11 is mounted so that its central axis X₁ is placed at an oblique angle (α) in relation to the central axis X' of the supply pipe S₁. The connecting pipe 11 is connected with the second pipe 13 by means of a connecting flange 14 which permits rotation of the pipes 11,13. The second pipe 13 is passed in a direction inclined (angle β) in relation to the first pipe 11 and to its central axis X₁ and connected to the stationary pulp supply pipe S₂ by means of a connecting flange 15 so that rotation is permitted.

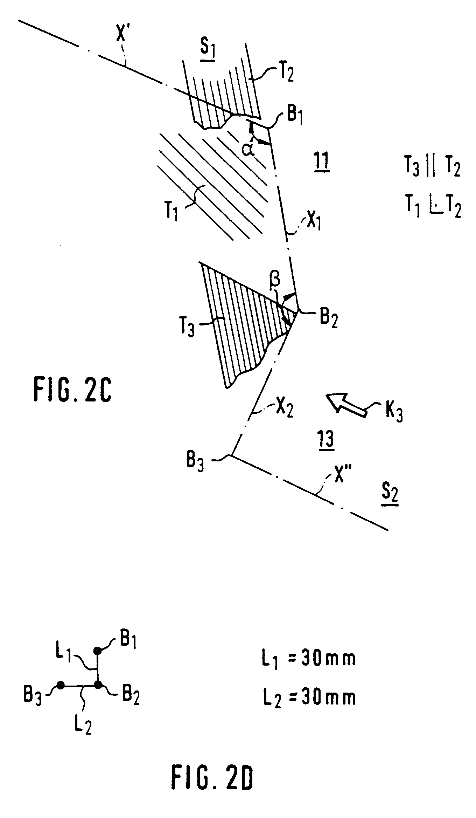

Fig. 2C illustrates the movement geometry of the compensator. According to the invention, the movement compensator is composed of a pipe construction connected with the supply pipe S₁ and with the stationary pulp supply pipe S₂. The compensator 10 comprises a first pipe 11 and a second pipe 13. Between the first pipe 11 and the second pipe 13, there is a flange joint 14 that permits rotation of the pipes in relation to one another. In a corresponding way, between the first pipe 11 and the supply pipe S₁, there is a flange joint 12 that permits rotation, and between the second pipe 13 and the supply pipe S₂, there is a flange joint 15 that permits rotation. The common plane of the central axis X' of the supply pipe S₁ and of the central axis X₁ of the first pipe 11 of the compensator 10 is denoted with T₁. In Fig. 2C, the plane that is perpendicular to the plane T₁ and in which plane the central axis X' of the supply pipe S₁ is placed is denoted with T₂. In the construction in accordance with the invention, the second pipe 13 of the compensator is placed in the plane T₃, which is parallel to the plane T₂. By means of an arrangement in accordance with the invention, tilting of the headbox and, thus, shifting of the supply pipe S₁ both in the direction Y and in the direction Z (in Fig. 1) are permitted.

Fig. 2D shows the arrangement of equipment as viewed in the direction of the arrow K₃ in Fig. 2C. The figure shows the end points B₁,B₂ and B₃ of the central axes of the pipes S₁,11 and 13 as viewed in the direction K₃. In the way shown in the figure, the distance L₁ between B₁ and B₂ is about 30 mm, and in a corresponding way the distance L₂ between B₂ and B₃ is also about 30 mm.

When the compensator is placed in its position in connection with the supply pipe S₁ and S₂, the pipe 11 i preferably placed so that the plane T, intersects the pivot axis X of tilting of the headbox P. In the solution, in such a case, both the central axis X' of the supply pipe S₁ and the central axis X" of the stationary supply pipe S₂ can be kept on the same line in the vertical plane and so that there is just the above difference in height of 30 mm between them.

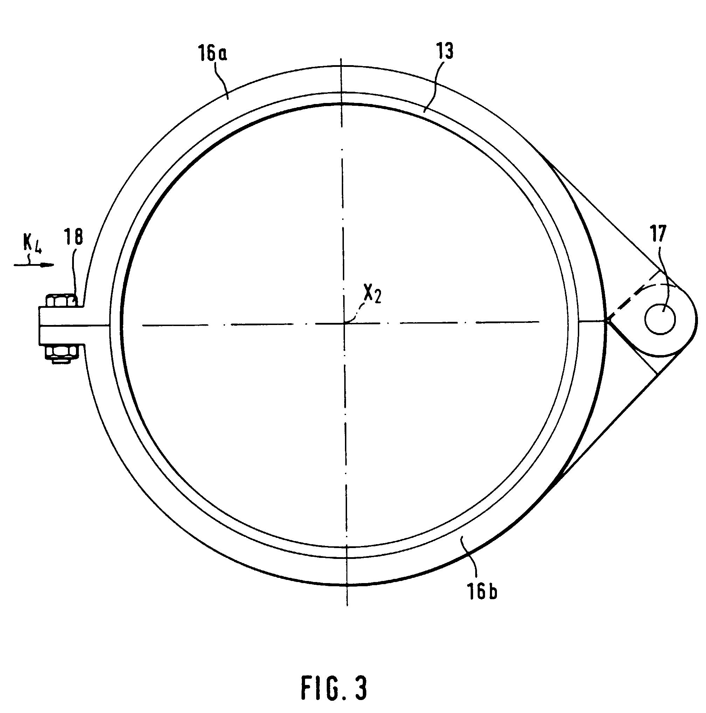

Fig. 3 shows the connecting flange construction as a sectional view taken along the line I-I in Fig. 2A. The connecting flange construction 14 comprises a joint collar 16, which is fitted to be openable and which is fitted to consist of two sides, comprising collar halves 16a,16b, which are linked with each other at the articulation points 17. The collar halves 16a, 16b of the joint collar are joined together by means of a screw 18, which is passed through the brackets provided on the collar parts.

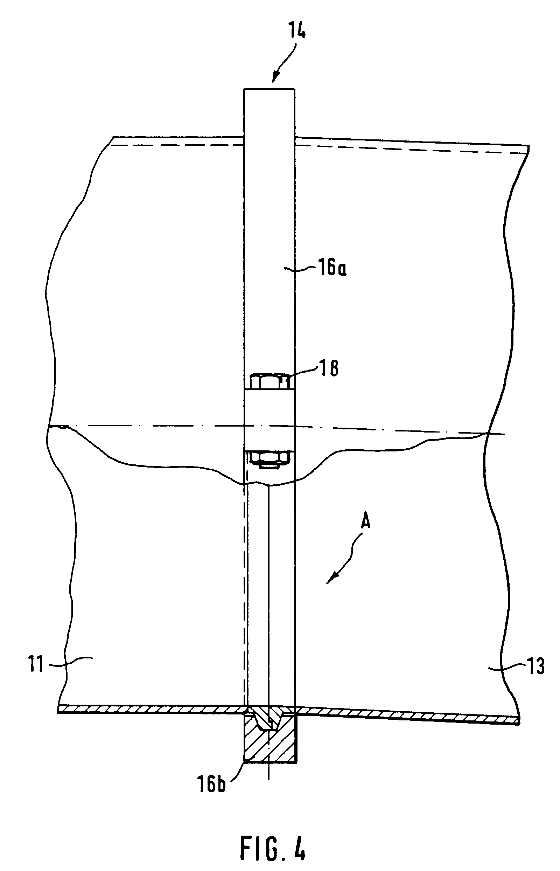

Fig. 4 shows the flange construction as viewed in the direction of the arrow K₄ in Fig. 3, i.e. as a side view and partly in section.

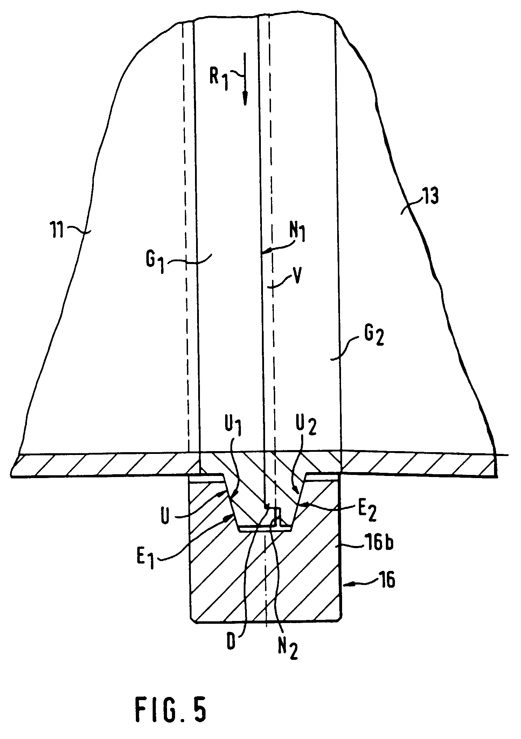

Fig. 5 shows the area A of Fig. 4 on an enlarged scale, i.e. the joint flange construction 14. The pipe 11 of the compensator is provided with an end portion G, which is provided with a shoulder and a flow opening, and, in a corresponding way, the second pipe 13 is provided with an end portion G₂ which is provided with a shoulder and a flow opening. The side faces E₁ and E₂ of the end portions G₁, G₂ with shoulders are placed at an oblique angle in relation to the radius R, of the joint, in which case, by turning the screw 18, it is possible to regulate the force with which the pipes 11,13 are pressed against one another. The tightening force is chosen so that rotation of the pipe 11 in relation to the pipe 13 is permitted. The side faces are jointly operative, with a wedge effect, with the side faces U₁ and U₂ of the groove U in the collar. The joint collar 16 comprises a groove U section whose form corresponds to the outer shape of the shoulders G₁, G₂. When the collar 16 halves 16a, 16b are joined together by means of the screw 18, the pipe portions 11,13 to be joined together are pressed against one another and kept together.

The pipe 11, which is provided with the end shoulder G₁, comprises a groove V in the front face N₁ of the shoulder G₁, into which groove V the shoulder end G₂ of the pipe portion 13 to be connected with it can be placed so that the front-face shoulder D placed on the front face N₂ of the shoulder end is placed into the groove V.

The figure shows the area A in Fig. 4, i.e. the connecting flange 14 between the pipes 11 and 13. A construction similar to that described in relation to Fig. 5 is also provided between the pipe 11 and the supply pipe S₁, i.e. the connecting flange construction 12 is similar to the connecting flange construction 14. In a corresponding way, between the pipe 13 and the stationary supply pipe S₂, there is a construction similar to that between the pipe 11 and the pipe 13, i.e. the connecting flange construction 15 is similar to the connecting flange constructions 14 and 12. Thus, in the figure, just one of said connecting flange constructions is illustrated by way of example, i.e. the connecting flange construction 14 between the compensator pipes 11 and 13.

## Claims

1. Supply pipe arrangement for pulp in a tiltable headbox of a paper machine, one end pipe (S₁) of which arrangement (S₁, 11, 13, S₂) being directly connected to the headbox and the other, remote end pipe (S₂) of which being stationary with respect to the headbox (P), wherein the arrangement includes a movement compensator (10), by means of which any movements taking place during tilting of the headbox are compensated for and transfer of strains to said stationary remote end pipe (S₂) is prevented, **characterized** in that the movement compensator (10) comprises a first pipe (11), which is connected to said one end pipe (S₁) by means of a connecting flange (12) that permits rotation of the first pipe (11) with respect to said one end pipe (S₁), and a second pipe (13), which is connected to said first pipe (11) by means of a connecting flange (14) that permits rotation of the second pipe (13) with respect to the first pipe (11) and which second pipe is further connected to said stationary end pipe (S₂) by means of a connecting flange (15) that permits rotation of the second pipe (13) with respect to the stationary end pipe (S₂).

2. Supply pipe arrangements as claimed in claim 1, **characterized** in that the first pipe (11) is installed at an oblique angle in relation to the central axis (X') of said one end pipe (S₁) and that the second pipe (13) is installed so that its central axis (X₂) is placed at an oblique angle in relation to the central axis (X₁) of the first pipe (11).

3. Supply pipe arrangements as claimed in claim 2, **characterized** in that the second pipe (13) is installed in a first plane (T₃) at an oblique angle in relation to the central axis (X₁) of the first pipe (11), which first plane (T₃) is parallel to a second plane (T₂) which has been drawn as perpendicular to the common plane (T₁) of the central axis (X') of said one end pipe (S₁) and of the central axis (X₁) of the first pipe (11) and which second plane (T₂) runs through the central axis (X') of said one end pipe (S₁).

4. Supply pipe arrangements as claimed in any of the preceding claims, **characterized** in that said three connecting flanges (12,14,15) comprise an end portion (G₁) that is provided with a shoulder and that is included in a pipe or end pipe (S₁,11,13) an end portion (G₂) that is provided with a shoulder and that is included in the other pipe or end pipe (11,13,S₂) to be joined, said shoulders (G₁,G₂) being joined together by means of a joint collar (16), which comprises a groove (U) and therein a cross-sectional shape that is compatible with the shapes of the shoulders (G₁,G₂).

5. Supply pipe arrangements as claimed in the preceding claim, **characterized** in that the joint collar (16) comprises collar halves (16a,16b), which are joined together by means of a screw (18), in which case, by regulating the tensioning force of the screw (18), the force is regulated with which the shoulders (G₁,G₂) are pressed against one another, the tensioning being, however, such that rotation of the interconnected pipes/end pipes in relation to one another is permitted.

6. Supply pipe arrangements as claimed in claim 5, **characterized** in that the outer side faces (E₁,E₂) of the shoulders (G₁,G₂) are placed at an oblique angle in relation to the direction of the radius (R₁) of the joint, in which case, by turning the screw (18), it is possible to regulate the force with which the pipes/end pipes are pressed against one another while the side faces (E₁,E₂) of the shoulders (G₁,G₂) are jointly operative, with a wedge effect, with the cross-sectional shape of the groove (U) in the joint collar.

7. Supply pipe arrangements as claimed in any of the claims 4-6, **characterized** in that the end shoulder (G₁) of the first pipe (11) comprises a groove (V) in its front face (N₁), into which groove the shoulder end (G₂) of the second pipe (13) to be connected can be placed so that the front-face shoulder (D) provided on the front face (N₂) of the shoulder end (G₂) of the second pipe (13) is placed into the groove (V).

## Patentansprüche

1. Zulaufrohranordnung für Brei in einem schwenkbaren Stoffauflauf einer Papiermaschine, wobei ein Endrohr (S₁) der Anordnung (S₁, 11, 13, S₂) unmittelbar mit dem Stoffauflauf verbunden ist und das andere entfernte Endrohr (S₂) davon in bezug zu dem Stoffauflauf (P) ortsfest ist, wobei die Anordnung eine Bewegungskompensiereinrichtung (10) einschließt, mit deren Hilfe jegliche während des Schwenkens des Stoffauflaufes stattfindenden Bewegungen kompensiert werden und eine Übertragung von Verformungen zu dem ortsfesten entfernten Endrohr (S₂) verhindert wird, **dadurch gekennzeichnet, daß** die Bewegungskompensiereinrichtung (10) ein erstes Rohr (11), das mit dem einen Endrohr (S₁) verbunden ist, und zwar mit Hilfe eines eine Drehung des ersten Rohres (11) bezüglich des einen Endrohres (S₁) gestattenden Verbindungsflansches (12), und ein zweites Rohr (13) aufweist, das mit dem ersten Rohr (11) verbunden ist, und zwar mit Hilfe eines eine Drehung des zweiten Rohres (13) bezüglich des ersten Rohres (11) gestattenden Verbindungsflansches (14), und welches zweite Rohr weiter mit dem ortsfesten Endrohr (S₂) verbunden ist, und zwar mit Hilfe eines eine Drehung des zweiten Rohres (13) bezüglich des ortsfesten Endrohres (S₂) gestattenden Verbindungsflansches (15).

2. Zulaufrohranordnung gemäß Patentanspruch 1, dadurch gekennzeichnet, daß das erste Rohr (11) in einem Schrägwinkel in Beziehung zu der Mittelachse (X') des einen Endrohres (S₁) eingebaut ist, und daß das zweite Rohr (13) derart eingebaut ist, daß seine Mittelachse (X₂) in einem Schrägwinkel in Beziehung zu der Mittelachse (X₁) des ersten Rohres (11) angeordnet ist.

3. Zulaufrohranordnung gemäß Patentanspruch 2, dadurch gekennzeichnet, daß das zweite Rohr (13) in einer ersten Ebene (T₃) eingebaut ist, und zwar in einem Schrägwinkel in Beziehung zu der Mittelachse (X₁) des ersten Rohres (11), welche erste Ebene (T₃) parallel zu einer zweiten Ebene (T₂) ist, die senkrecht zu der gemeinsamen Ebene (T1) der Mittelachse (X') des einen Endrohres (S₁) und der Mittelachse (X₁) des ersten Rohres (11) gezogen worden ist, und welche zweite Ebene (T₂) durch die Mittelachse (X') des einen Endrohres (S₁) verläuft.

4. Zulaufrohranordnung gemäß einem der vorangegangenen Patentansprüche, dadurch gekennzeichnet, daß die drei Verbindungsflansche (12, 14, 15) einen Endabschnitt (G₁), der mit einer Schulter versehen ist und der in einem Rohr oder Endrohr (S₁, 11, 13) enthalten ist, und einen Endabschnitt (G₂) aufweisen, der mit einer Schulter versehen ist und der in dem anderen, zu verbindenden Rohr oder Endrohr (11, 13, S₂) enthalten ist, wobei die Schultern (G₁, G₂) mit Hilfe einer Verbindungsmuffe (16) miteinander verbunden sind, die eine Nut (U) und darin eine Querschnittsform aufweist, die mit den Formen der Schultern (G₁, G₂) kompatibel ist.

5. Zulaufrohranordnung gemäß dem vorangegangenen Patentanspruch, dadurch gekennzeichnet, daß die Verbindungsmuffe (16) Muffenhälften (16a, 16b) aufweist, die mit Hilfe einer Schraube (18) miteinander verbunden sind, in welchem Falle durch Einstellen der Spannkraft der Schraube (18) die Kraft eingestellt wird, mit der die Schultern (G₁, G₂) gegeneinander gepreßt werden, wobei die Spannung jedoch derart ist, daß eine Drehung der miteinander verbundenen Rohre/Endrohre in Beziehung zueinander gestattet ist.

6. Zulaufrohranordnung gemäß Patentanspruch 5, dadurch gekennzeichnet, daß die äußeren Seitenflächen (E₁, E₂) der Schultern (G₁, G₂) in Beziehung zu der Richtung des Radius (R₁) der Verbindung in einem Schrägwinkel angeordnet sind, in welchem Falle es durch Drehen der Schraube (18) möglich ist, die Kraft einzustellen, mit der die Rohre/Endrohre gegeneinander gepreßt werden, während die Seitenflächen (E₁, E₂) der Schultern (G₁, G₂) mit einer Keilwirkung mit der Querschnittsform der Nut (U) in der Verbindungsmuffe gemeinsam wirksam sind.

7. Zulaufrohranordnung gemäß einem der Patentansprüche 4 bis 6, dadurch gekennzeichnet, daß die Endschulter (G1) des ersten Rohres (11) in ihrer Vorderfläche (N₁) eine Nut (V) aufweist, in welche Nut das Schulterende (G₂) des zweiten, zu verbindenden Rohres (13) eingesetzt werden kann, so daß die Vorderflächenschulter (D), die an der Vorderfläche (N₂) des Schulterendes (G₂) des zweiten Rohres (13) versehen ist, in der Nut (V) angeordnet ist.

## Revendications

1. Agencement de conduits d'alimentation pour la pâte dans une boîte de tête inclinable d'une machine à papier, un premier conduit d'extrémité (S₁) de cet agencement (S₁, 11, 13, S₂) étant raccordé directement à la boîte de tête et l'autre conduit d'extrémité éloigné (S₂) étant fixe par rapport à la boîte de tête (P), l'agencement comprenant un compensateur de déplacement (10), à l'aide duquel tout déplacement intervenant lors de l'inclinaison de la boîte de tête est compensé et un transfert de contraintes audit conduit d'extrémité éloigné fixe (S₂) est empêché, caractérisé en ce que le compensateur de déplacement (10) comprend un premier conduit (11) qui est raccordé audit premier conduit d'extrémité (S₁) au moyen d'une bride de raccordement (12) qui permet une rotation du premier conduit (11) par rapport audit premier conduit d'extrémité (S₁), et un second conduit (13) qui est raccordé audit premier conduit (11) au moyen d'une bride de raccordement (14) qui permet une rotation du second conduit (13) par rapport au premier conduit (11), lequel second conduit est en outre raccordé audit conduit d'extrémité fixe (S₂) à l'aide d'une bride de raccordement (15) qui permet une rotation du second conduit (13) par rapport au conduit d'extrémité fixe (S₂).

2. Agencement de conduits d'alimentation selon la revendication 1, caractérisé en ce que le premier conduit (11) est disposé dans une position oblique par rapport à l'axe central (X') dudit premier conduit d'extrémité (S₁) et que le second conduit (13) est disposé de telle sorte que son axe central (X₂) est placé dans une position oblique par rapport à l'axe central (X₁) du premier conduit (11).

3. Agencement de conduits d'alimentation selon la revendication 2, caractérisé en ce que le second conduit (13) est disposé dans un premier plan (T₃) dans une position oblique par rapport à l'axe centrale (X₁) du premier conduit (11), lequel premier plan (T₃) est parallèle à un second plan (T₂) qui a été tracé perpendiculairement au plan commun (T₁) de l'axe central (X') dudit premier conduit d'extrémité (S₁) et de l'axe central (X₁) du premier conduit (11), et lequel second plan (T₂) passe par l'axe central (X') dudit premier conduit d'extrémité (S₁).

4. Agencement de conduits d'alimentation selon l'une quelconque des revendications précédentes, caractérisé en ce que lesdites trois brides de raccordement (12,14,15) comprennent une partie d'extrémité (G₁) qui est équipée d'un épaulement et qui est contenue dans un conduit ou conduit d'extrémité (S₁, 11, 13) et une partie d'extrémité (G₂) qui comporte un épaulement et qui est contenue dans l'autre conduit ou conduit d'extrémité (11,13,S₂) devant être raccordé, lesdits épaulements (G₁,G₂) étant réunis au moyen d'un collet de jonction (16) qui comporte une rainure (U) et, dans cette rainure, une forme en coupe transversale qui est compatible avec les formes des épaulements (G₁,G₂).

5. Agencement de conduits d'alimentation selon la revendication précédente, caractérisé en ce que le collet de jonction (16) comprend des moitiés de collet (16a,16b) qui sont réunies l'une à l'autre à l'aide d'une vis (18), auquel cas en réglant la force de serrage de la vis (18), la force avec laquelle les épaulements (G₁,G₂) sont serrés l'un contre l'autre est réglée, le serrage étant cependant tel qu'une rotation réciproque des conduits/conduits d'extrémité interconnectés est permise.

6. Agencement de conduits d'alimentation selon la revendication 5, caractérisé en ce que les faces latérales extérieures (E₁,E₂) des épaulements (G₁,G₂) sont situées dans une position oblique par rapport à la direction du rayon (R₁) de la jonction, auquel cas, en faisant tourner la vis (18), il est possible de régler la force avec laquelle les conduits/conduits d'extrémité sont serrés l'un contre l'autre, tandis que les faces latérales (E₁,E₂) des épaulements (G₁,G₂) agissent conjointement, en produisant un effet de coin, avec la forme en coupe transversale de la rainure (U) dans le collier de jonction.

7. Agencement de conduits d'alimentation selon l'une quelconque des revendications 4-6, caractérisé en ce que l'épaulement d'extrémité (G₁) du premier conduit (11) comprend une rainure (V) aménagée dans sa face avant (N₁) et dans laquelle l'extrémité (G₂) de l'épaulement du second conduit (13) devant être raccordé peut être placée de sorte que l'épaulement (D) prévu sur la face avant (N₂) de l'extrémité (G₂) de l'épaulement du second conduit (13) est disposé dans la rainure (G).
